# EUROPÄISCHE PATENTSCHRIFT

(11) **EP 2 158 992 B1**
(45) Veröffentlichungstag und Bekanntmachung des Hinweises auf die Patenterteilung: **03.07.2019**
(21) Anmeldenummer: 09010727.7
(22) Anmeldetag: 20.08.2009
(51) Int. Cl.: B23D 55/08, B23D 59/02, B23D 59/04

(54) **Sägemaschine mit einer Führung für ein Sägeband oder ein Sägeblatt**
Sawing machine comprising a guide for a saw belt or a saw blade
Machine de sciage munie d'un système de guidage pour un ruban de scie ou une lame de scie

(30) Priorität: 28.08.2008 DE 102008044669
(43) Veröffentlichungstag der Anmeldung: 03.03.2010
(73) Patentinhaber: KEURO Besitz GmbH & Co. EDV-Dienstleistungs KG, 77855 Achern (DE)
(72) Erfinder: Benz, Wolfgang-Gottfried, 77791 Berghaupten (DE)
(74) Vertreter: Lemcke, Brommer & Partner Patentanwälte Partnerschaft mbB

(56) Entgegenhaltungen:
- EP-A1- 0 447 772
- EP-A1- 1 466 688
- DE-U1- 29 613 849
- DE-U1- 29 918 249
- US-A- 2 741 281
- US-A- 3 104 575
- US-A- 4 558 614
- US-B1- 6 581 502

## Beschreibung

Die Erfindung betrifft eine Sägemaschine nach dem Oberbegriff des Anspruchs 1. Demnach ist diese Sägemaschine mit einem Sägeband oder einem Sägeblatt versehen und weist eine Führung für das Sägeband oder Sägeblatt auf. Diese Führung umfasst eine Halterung und hochfeste Gleitstücke, die zur seitlichen Führung des Sägebands oder Sägeblatts an der Halterung angebracht und für einen zumindest zeitweisen gleitenden Kontakt mit einer Seitenfläche des Sägebands oder des Sägeblatts vorgesehen sind.

Bei Kreissägemaschinen ist es üblich, die beiden Seitenflächen des Sägeblatts in der Nähe der Sägezähne mittels einer vorderen und einer hinteren Sägeblattführung zu führen, um ein Schrägziehen des Sägeblatts - was insbesondere bei zunehmendem Verschleiß des Sägeblatts zu befürchten ist - sowie Schwingungsbewegungen des Sägeblatts, insbesondere Axialschwingungen, zu unterdrücken oder zumindest abzuschwächen. Solche Sägeblattführungen sind mit hochfesten Auflagen, insbesondere Hartmetallauflagen versehen, um einen verschleißarmen gleitenden Kontakt mit dem Sägeblatt gewährleisten zu können. Sägeblattführungen dieser Art sind beispielsweise in der EP 1 466 688 A1 offenbart.

Bei Bandsägemaschinen ist es ebenfalls üblich, möglichst nahe am zu sägenden Werkstück Bandführungen der eingangs genannten Art anzubringen, um ein Verziehen des Sägebandes sowie Schwingungen desselben zu unterdrücken bzw. zu minimieren. Insbesondere dann, wenn das Sägeband in einer Ebene um Antriebs- bzw. Umlenkrollen läuft, die zur Schnittebene geneigt verläuft oder die parallel zur Schnittebene steht, sind solche Bandführungen unerlässlich, da das Sägeband vor seinem Eintritt in das zu sägende Werkstück sowie nach Verlassen desselben in die Schnittebene gedreht bzw. aus der Schnittebene in die Umlaufposition zurückgedreht werden muss.

Führungen für das Sägeband einer Bandsägemaschine sind im allgemeinen zangenartig ausgebildet, wobei beidseits des Sägebandes Hartmetallgleitstücke für eine seitliche Bandführung sorgen, während der Sägebandrücken entweder über Laufrollen oder ebenfalls mittels Hartmetallgleitstücken geführt wird. Ein Beispiel für eine entsprechende Bandführung ist in der DE 198 28 589 A1 offenbart. Weitere Beispiele für Bandführungen mit Hartmetallgleitstücken sind in der US-A-4,558,614, der US-A-3,104,575, der DE-U-296 13 849 und der EP-A-0 447 772 offenbart. Die DE-U-296 13 849 offenbart eine Sägemaschine nach dem Oberbegriff des Anspruchs 1.

Seitliche Bandführungen sind bislang oft mit schmalen, in Bewegungsrichtung des Sägebands orientierten Hartmetallstegen ausgerüstet worden, und zwar vorzugsweise mit einem Steg im Bereich der Sägezähne und einem Steg im Bereich des Bandrückens, so dass eine stabile seitliche Führung des Sägebands gewährleistet ist. Die Ausbildung der hochfesten Gleitstücke als in Bewegungsrichtung des Sägebands orientierte Stege verhindert insbesondere, dass sich Späne an der Bandführung sammeln und sich dort festsetzen, was die Funktion der Bandführung erheblich beeinträchtigen könnte.

Bei einer Erhöhung der Zerspanungsleistung einer Bandsägemaschine hat die Anmelderin jedoch nun erkannt, dass insbesondere die Bandführungen verbessert werden müssen; das Sägeband versucht einem höheren Schnittdruck durch ein seitliches Wegkippen auszuweichen, so dass insbesondere die seitlichen Bandführungen stärker belastet werden. Diese Erkenntnisse sind grundsätzlich auch für Kreissägemaschinen übertragbar.

Der vorliegenden Erfindung liegt daher die Aufgabe zugrunde, eine Sägemaschine mit einer Führung für ein Sägeband oder ein Sägeblatt der eingangs genannten Art zur Herstellung einer höheren Leistungsfähigkeit der Sägemaschine zu verbessern.

Gelöst ist diese Aufgabe durch eine Sägemaschine mit den Merkmalen des Anspruchs 1. Bevorzugte Ausgestaltungen und Weiterbildungen der erfindungsgemäßen Sägemaschine sind in den Ansprüchen 2 bis 11 niedergelegt.

Erfindungsgemäß ist erkannt worden, dass die Führung des Sägebands oder des Sägeblatts eine der Hauptursachen für einen schnellen Verschleiß des Sägebands bzw. Sägeblatts ist. Insbesondere bei einer Bandsägemaschine ist dies der Fall, wenn die Zerspanungsleistung gegenüber dem status quo (bei dem sich das Sägeband mit typischerweise etwa 50 - 140 m / min bewegt) deutlich erhöht wird. Denn durch den erhöhten Schnittdruck und die erhöhte Geschwindigkeit des Sägebands bzw. des Sägeblatts erhöht sich zum einen die Flächenpressung zwischen den hochfesten Gleitstücken der Führung und dem Sägeband bzw. Sägeblatt sowie zum anderen auch die Relativgeschwindigkeit dieser jedenfalls zeitweise aneinander gleitenden Bauteile. Beides führt zu einer stark erhöhten Wärmeentwicklung aufgrund einer stark erhöhten Reibung.

Durch die stegartige Ausbildung der hochfesten Gleitstücke von Bandführungen im Stand der Technik, die wegen der Gefahr eines Zusetzens durch Späne bislang für unverzichtbar gehalten wurde, verstärkt sich die lokale Wärmebelastung des Sägebands, da jeweils nur sehr schmale Bereiche der Sägebandfläche in gleitenden Kontakt mit den hochfesten Gleitstücken der Bandführung kommen. Erfindungsgemäß ist erkannt worden, dass die Wärmebelastung des Sägebands an denjenigen Stellen, an denen es Kontakt mit den hochfesten Gleitstücken der Bandführung erhält, so hoch werden kann, dass eine martensitische Härtung des Bandmaterials erfolgt und dieses dementsprechend versprödet. Hierdurch können sich Haarrisse bilden, aufgrund deren das Band schließlich reißt.

Die vorliegende Erfindung löst dieses Problem im wesentlichen dadurch, dass mehrere hochfeste, flächige Führungsplatten als Gleitstücke verwendet werden, die gegen die Bewegungsrichtung des Sägebands oder Sägeblatts geneigt und unter Bildung von Zwischenräumen voneinander beabstandet angeordnet sind. Eine solche Ausbildung bzw. Anordnung der hochfesten Gleitstücke reduziert die Flächenpressung auf das Sägeband bzw. Sägeblatt. Soweit die Führungsplatten bezüglich einer quer zur Bewegungsrichtung des Sägebands oder Sägeblatts orientierten Richtung flächig angeordnet sind, wird darüber hinaus die Reibungswärme-Belastung auf einen größeren Bereich des Sägebands bzw. Sägeblatts verteilt. Beides führt dazu, dass die Wärmebelastung des Sägebands bzw. Sägeblatts trotz Erhöhung der Zerspanungsleistung gegenüber dem Stand der Technik deutlich abnimmt und die Gefahr einer martensitischen Härtung eliminiert ist. Das Material des Sägebands bzw. Sägeblatts bleibt vielmehr unbeeinflusst, wodurch sich nach Versuchen der Anmelderin die Standzeit desselben erheblich verlängert.

Das Eliminieren der Gefahr einer Materialversprödung durch zu hohe Wärmebelastung des Sägebands bzw. Sägeblatts wird im Rahmen der vorliegenden Erfindung allerdings nicht, wie an sich zu erwarten wäre, durch die stark erhöhte Gefahr erkauft, dass sich Späne an der Führung festsetzen. Denn erfindungsgemäß weisen die hochfesten Führungsplatten, jedenfalls zumindest eine der Führungsplatten, eine bezüglich der Bewegungsrichtung des Sägeblatts oder Sägebandes stromaufwärtige Kante auf, die wenigstens zu einem Teil gerade ausgebildet oder mit einer stetigen Krümmung versehen ist, wobei die Kante - oder bei gekrümmten Kanten deren Tangenten - zur Bewegungsrichtung des Sägeblatts oder Sägebandes in einem Winkel zwischen 20° bis 70° geneigt verlaufen. Eine solche Schrägstellung einer stromaufwärtigen Kante mindestens einer Führungsplatte führt dazu, dass etwa am Sägeblatt oder Sägeband anhaftende Späne sich an dieser Kante nicht sammeln können, sondern aufgrund einer vektoriellen Addition der auf die Späne wirkenden Kräfte an der schräg gestellten Führungsplatten-Kante seitlich abgelenkt und schließlich abgeworfen werden; sie können sich also an solcherart angeordneten, flächig ausgebildeten Führungsplatten einer erfindungsgemäß ausgebildeten Führung nicht ansammeln und Störungen verursachen.

Die stromaufwärtigen Kanten mehrerer Führungsplatten verlaufen erfindungsgemäß im wesentlichen parallel, so dass Zwischenräume gebildet werden, aus denen etwa angesammelte Späne herausfallen können. Die Kombination von Zwischenräumen zwischen den Führungsplatten und einer Schrägstellung von deren stromaufwärtigen Kanten verstärkt den Effekt, dass an der Führung etwa aufgefangene Späne unverzüglich ausgeworfen werden, nochmals erheblich.

Dementsprechend sollten diese Zwischenräume eine Tiefe aufweisen, die größer ist als die Ausdehnung der Späne.

Besonders bevorzugt ist die erfindungsgemäße Neigung der stromaufwärtigen Kanten so gewählt, dass etwa in Zwischenräumen angesammelte Späne, oder allgemein Späne, die auf die Kante auflaufen, nach unten bzw. nach außen gegen die Sägezähne des Sägebandes oder des Sägeblatts geleitet werden. Die Neigung der stromaufwärtigen Kanten der hochfesten Führungsplatten ist erfindungsgemäß daher so orientiert, dass das Sägeband oder Sägeblatt die Führungsplatten zunächst in einem von den Sägezähnen am weitesten entfernten Bereich ihrer Kanten erreicht. Über die vektorielle Addition der Kräfte, die das sich unter der Führungsplatte weg bewegende Sägeband oder Sägeblatt auf die etwa vorhandenen Späne ausübt, werden diese dann entlang der geneigten Kante zu den Sägezähnen hin bewegt und dort ausgeworfen.

Eine besonders bevorzugte Weiterbildung der vorliegenden Erfindung besteht darin, dass die Halterung der Führung mit in oder neben den hochfesten Führungsplatten mündenden Öffnungen zum Einleiten von Kühlflüssigkeit zwischen die Halterung und das Sägeblatt bzw. Sägeband versehen sein kann. Die Kühlflüssigkeit reduziert die Reibung zwischen den hochfesten Führungsplatten und dem Sägeband oder Sägeblatt, sie kühlt das Sägeband oder Sägeblatt, schwemmt Späne aus und dämpft darüber hinaus etwaige Schwingungen, jedenfalls soweit Kühlflüssigkeit in einer Menge in die Führung eingebracht wird, die ein "Aufschwimmen" des Sägebands oder Sägeblatts auf den hochfesten Führungsplatten erzeugt. Die Verringerung der Reibung durch Einbringen von Kühlflüssigkeit vermindert die Wärmebelastung des Sägebands bzw. Sägeblatts nochmals erheblich, wobei die Kühlwirkung der Kühlflüssigkeit diesen Effekt noch unterstützt.

Der zusätzliche Effekt, dass die Kühlflüssigkeit etwa vorhandene Späne aus der Führung ausschwemmt, ist im Rahmen der vorliegenden Erfindung allerdings besonders vorteilhaft, denn weil die hochfesten Führungsplatten in einem flachen Winkel zur Bewegungsrichtung des Sägebands bzw. Sägeblatts angeordnet sind, unterstützt die Relativbewegung zwischen dem Sägebad bzw. Sägeblatt und den hochfesten Führungsplatten das Ausschwemmen und eliminiert die Gefahr eines Festsetzens von Spänen. Spätestens mit der erfinderischen Idee, Kühlflüssigkeit in die Führung des Sägebands bzw. des Sägeblatts einzuleiten, ist also der Zielkonflikt zwischen einer aus Gründen der Wärmeentwicklung erwünschten flächigen Ausbildung der Gleitstücke und der Vermeidung einer Ansammlung von Spänen gelöst. Hierzu ist vorzugsweise in jedem Zwischenraum zwischen den hochfesten Führungsplatten jeweils mindestens eine Öffnung zum Einleiten von Kühlflüssigkeit vorgesehen.

Als weiterer Vorteil einer Einbringung von Kühlflüssigkeit in die erfindungsgemäß ausgebildete Führung ist zu nennen, dass insbesondere ein Sägeband, aber auch ein Sägeblatt außergewöhnlich sorgfältig mit Kühlflüssigkeit benetzt wird, bevor es in Berührung mit dem zu sägenden Werkstück gelangt. Bislang wird Kühlflüssigkeit recht ungenau auf das Sägeband oder Sägeblatt aufgebracht, was bei einer Fehlbedienung dazu führen kann, dass im Schnittkanal im Werkstück zu wenig Kühlflüssigkeit vorhanden ist, was wiederum den Verschleiß des Sägebands bzw. Sägeblatts erhöht.

In diesem Zusammenhang ist es vorteilhaft, wenn die Öffnungen zum Einleiten von Kühlflüssigkeit bei einer erfindungsgemäß ausgestalteten seitlichen Sägebandführung so angeordnet sind, dass die Kühlflüssigkeit zum Teil auch an die Sägezähne geleitet wird und nicht nur zur Verringerung der Reibung zwischen dem Sägeband und den hochfesten Führungsplatten sowie zum Ausschwemmen von Spänen dient.

Soweit es sich bei der erfindungsgemäßen Sägemaschine um eine Bandsägemaschine handelt, gibt es mehrere vorteilhafte Weiterbildungen der Erfindung:
Vorteilhaft ist es beispielsweise, die hochfesten Führungsplatten solcherart flächig auszubilden, dass sie die Höhe des Sägebands in Projektion zu mehr als 50 % überdecken. Die durch Reibung erzeugte Wärme verteilt sich demnach auf eine größere Fläche des Querschnitts des Sägebands.

Weitere besondere Vorteile ergeben sich, wenn eine erfindungsgemäß ausgestaltete Führung der Bandsägemaschine auch zur Führung des Bandrückens verwendet wird. Hierzu ist an der Halterung der Führung, oder gegebenenfalls an einer zusätzlichen Rücken-Halterung, mindestens eine weitere hochfeste Bandrücken-Führungsplatte zur Führung des Bandrückens des Sägebandes vorgesehen. Auch bei der Führung des Bandrückens bietet es insbesondere Vorteile, wenn Kühlflüssigkeit eingeleitet wird, um die Reibung zwischen den flächig ausgebildeten hochfesten Führungsplatten und dem Bandrücken zu minimieren; hierdurch wird einer Aufpilzung des Bandrückens entgegengewirkt, was den Verschleiß des Sägebands entscheidend verringert.

Besonders vorteilhaft ist es, wenn die Bandrücken-Führungsplatte mit einer auf dem Bandrücken abrollenden Führungsrolle kombiniert wird. Denn die Führungsrolle ist in der Lage, hohe Kräfte auf den Bandrücken auszuüben, ohne die Reibungskräfte am Bandrücken nennenswert zu erhöhen. Dies wird normalerweise mit dem Nachteil erkauft, dass von einer solchen Führungsrolle etwaige Bandschwingungen nicht gedämpft werden, was zu einer Geräuschentwicklung und einem höheren Verschleiß führen kann. Demgegenüber dämpft eine Führung mit Gleitstücken Bandschwingungen effektiv, so dass eine Kombination einer solchen mit einer Führungsrolle die Vorteile beider Systeme vereinigt und deren jeweilige Nachteile eliminiert.

Eine solche Führungsrolle zum Führen des Bandrückens des Sägebands kann bevorzugt auf einer Wippe angebracht sein, gegebenenfalls zusammen mit der Bandrücken-Führungsplatte. Diese Wippe ist dann mit einer Kraftmesseinrichtung zur Ermittlung einer auf den Bandrücken wirkenden Kraft versehen. Hierdurch ist es möglich, die Bandsägemaschine auch bei hohen Zerspanungsleistungen sehr genau hinsichtlich ihrer Vorschubgeschwindigkeit zu regeln und insbesondere den Schnittdruck in einem optimalen Bereich zu halten.

Die Führung der erfindungsgemäßen Bandsägemaschine kann schließlich mit einem Führungsgehäuse ergänzt werden, welches eine schaltbare Kühlmittelzufuhr aufweist und vorzugsweise mit einer Kraftmesseinrichtung versehen ist, die eine auf den Bandrücken des Sägebands wirkende Kraft detektiert.

Ausführungsbeispiele für eine erfindungsgemäß ausgestaltete Bandführung für eine Bandsägemaschine sind im folgenden anhand der beigefügten Zeichnungen näher beschrieben und erläutert. Es zeigen:
- Figur 1: eine schematische perspektivische Darstellung zweier Bandführungen in Führungsgehäusen für ein Sägeband einer Bandsägemaschine;
- Figur 2: eine Darstellung wie Figur 1, jedoch mit aus den Führungsgehäusen ausgebauten Bandführungen;
- Figur 3: eine ausgebaute Bandführung mit Führungsgehäuse aus Figur 2 in zerlegter und teilgeschnittener Darstellung;
- Figur 4: eine teilgeschnittene Darstellung der seitlichen Führungen der Bandführungen aus den Figuren 1 bis 3;
- Figur 5: eine teilgeschnittene Darstellung der Bandrückenführung aus den Figuren 1 bis 3;
- Figur 6: eine andere Ausgestaltung einer seitlichen Bandführung;
- Figur 7: eine andere Ausgestaltung einer Bandrückenführung.

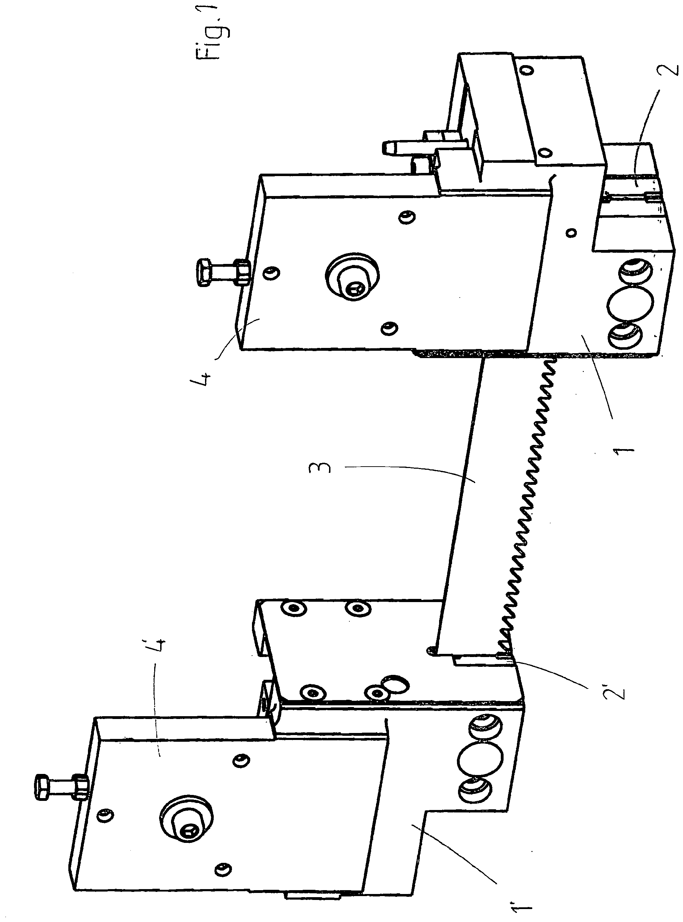

In Figur 1 sind zwei Führungsgehäuse 1, 1' mit erfindungsgemäß ausgestalteten, in die Führungsgehäuse 1, 1' eingebauten und daher hier kaum sichtbaren Bandführungen 2, 2' zusammen mit einem Abschnitt eines Sägebands 3 einer (nicht dargestellten) Bandsägemaschine dargestellt. Die beiden Führungsgehäuse 1, 1' sind beidseits des Schnittbereichs angeordnet, um ein Schrägziehen des Sägebands 3 sowie Schwingungen desselben zu unterdrücken bzw. abzuschwächen. Mittels Befestigungsplatten 4, 4', hinter denen eine Kraftmesseinrichtung und eine schaltbare Kühlmittelzufuhr Platz finden, sind die Führungsgehäuse 1, 1' am beweglichen Oberteil der Bandsägemaschine befestigt.

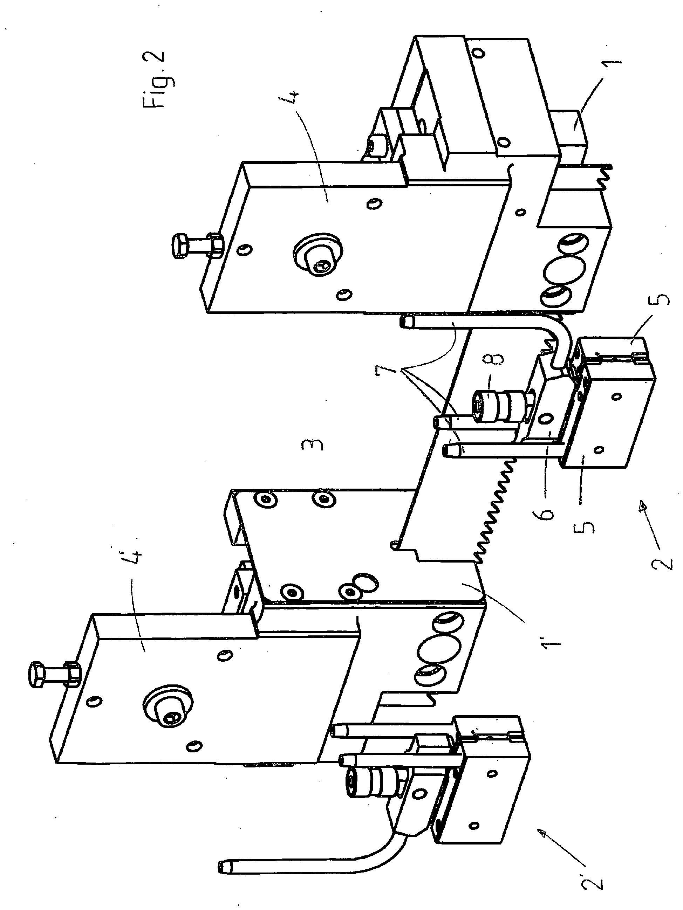

Figur 2 zeigt die Anordnung aus Figur 1, wobei die beiden Bandführungen 2, 2' aus ihren Führungsgehäusen 1, 1' ausgebaut worden sind. Wie hier zu erkennen ist, bestehen die Bandführungen 2, 2' jeweils aus zwei Seitenführungen 5 und einer Bandrückenführung 6, wobei sowohl beide Seitenführungen 5 als auch die Bandrückenführung 6 mit Kühlflüssigkeits-Zuleitungen 7 zum Einleiten von Kühlflüssigkeit in die Bandführung 2, 2' versehen sind. Die Bandrückenführung 6 trägt darüber hinaus eine Kraftmesseinrichtung 8, um die auf den Bandrücken wirkende Kraft zu messen.

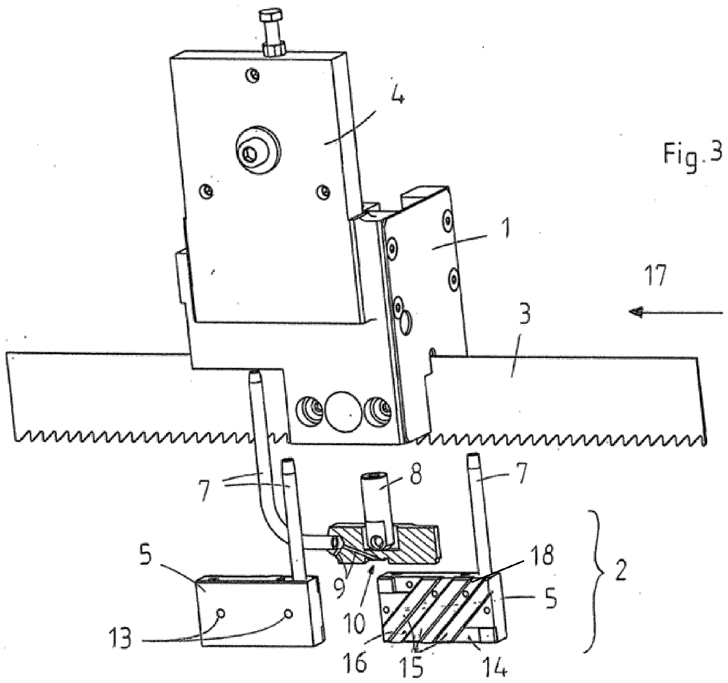

In Figur 3 ist die Bandführung 2 in demontierten Zustand dargestellt, wobei die Bandrückenführung 6 teilgeschnitten dargestellt ist, um ihr "Innenleben" zu verdeutlichen. Wie bei der Bandrückenführung 6 deutlich zu erkennen ist, mündet die Kühlflüssigkeits-Zuleitung 7 in zwei Kanäle 9 im Inneren der Bandrückenführung 6. Ein Kanal 9 mündet stromabwärts der Bandrückenführung 6, während der andere Kanal 9 in einem Zwischenraum 10 mündet und dort gegebenenfalls für ein Ausschwemmen von Spänen sorgt. Die durch die Kanäle 9 zugeführte Kühlflüssigkeit verringert die Reibung zwischen der Bandrückenführung 6 und dem Bandrücken des Sägebands 3 ganz erheblich, wobei die Profilierung durch den Zwischenraum 10 Probleme mit Spänen verhindert. Im Übrigen besteht die Bandrückenführung 6 aus einer Rücken-Halterung 11 und zwei hochfesten Bandrücken-Führungsplatten 12, die den Zwischenraum 10 zwischen sich einschließen.

Die Seitenführungen 5 sind in Figur 3 in perspektivischer Ansicht dargestellt, wodurch man bei der vorne liegenden Seitenführung 5 zwei Bohrungen 13 zur Befestigung im Führungsgehäuse 1 erkennen kann. Die hintere dargestellte Seitenführung 5 zeigt ihre dem Sägeband 3 zugewandte Seite, wodurch ihr grundsätzlicher Aufbau aus einer Halteplatte 14 und fünf darauf aufgelöteten flächigen Führungsplatten 15 deutlich wird. Die Führungsplatten 15 sind aus Hartmetall oder aus Keramik gefertigt.

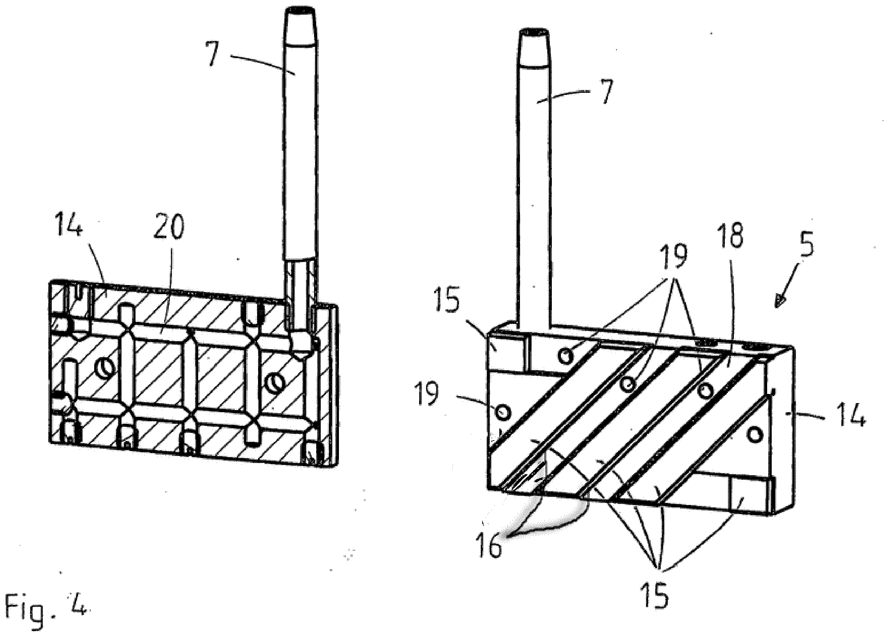

Die Führungsplatten 15 sind mit gerade verlaufenden stromaufwärtigen Kanten 16 versehen, die mit einer Bewegungsrichtung 17 des Sägebands 3 einen Winkel von etwa 45° einschließen. In einer Projektion auf die Höhe des Sägebands 3 überdecken die Führungsplatten 15 das Sägeband 3 zu einem Großteil, was in einer vorteilhaft kleinen Flächenpressung resultiert und die thermische Belastung von eng begrenzten Bereichen des Sägebands 3 vermeidet. Etwaige an den Kanten 16 der Führungsplatten 15 sich ansammelnde Späne werden durch die Bewegung des Sägebands 3 entlang der Kanten 16 aus den Zwischenräumen 18 zwischen den einzelnen Führungsplatten 15 hinausbefördert Wie Figur 4 in einer teilgeschnittenen Darstellung deutlicher zeigt, sind in den Zwischenräumen 18 zwischen den Führungsplatten 15 auf den Halterungen 14 der Seitenführungen 5 Öffnungen 19 vorgesehen, die mittels in die Halterung 14 eingebrachten Kanälen 20 mit der Kühlflüssigkeits-Zuleitung 7 in Verbindung stehen und somit Kühlflüssigkeit in die Zwischenräume 18 sowie allgemein in den Bereich der Führungsplatten 15 leiten.

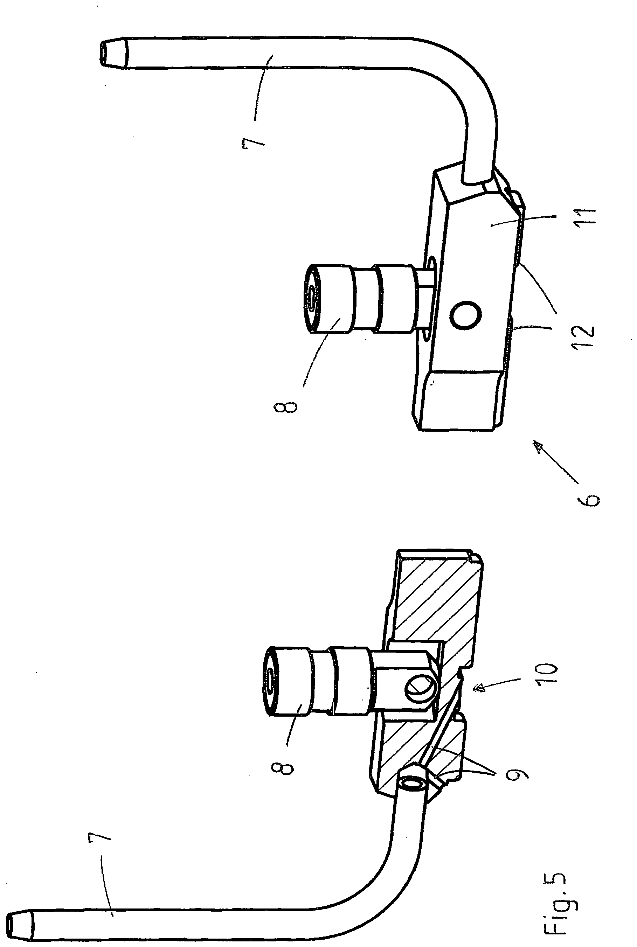

Figur 5 zeigt nochmals die Bandrückenführung 6 in einer teilgeschnittenen Ansicht sowie in einer perspektivischen Ansicht im Detail, wodurch insbesondere erkennbar wird, dass die ebenfalls aus Hartmetall oder Keramik bestehenden, hochfesten Bandrücken-Führungsplatten 12 in die Rücken-Halterung 11 eingesetzt und dort verlötet sind.

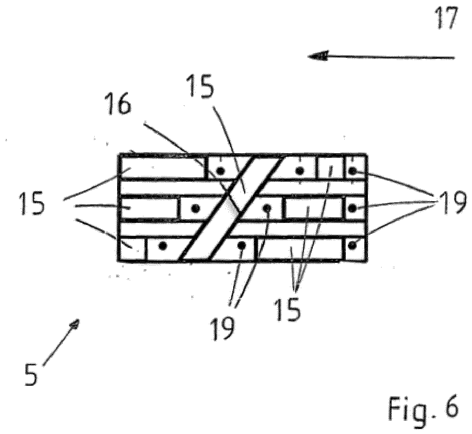

Figur 6 zeigt schließlich ein anderes, nicht erfindungsgemäßes Layout der Anordnung der Führungsplatten 15 auf der Halterung 14 einer Seitenführung 5. Hier ist vor jeder einzelnen Führungsplatte 15 stromaufwärts mindestes eine Öffnung 19 für den Austritt von Kühlflüssigkeit vorgesehen, so dass das Sägeband 3 auf allen Führungsplatten 15 aufschwimmt. Die in der Mitte angeordnete, angewinkelte Führungsplatte 15 ermöglicht nicht nur das seitliche Ausschwemmen von Spänen, das durch die Bewegung des Sägebands 3 unterstützt wird, sondern leitet außerdem die durch die Öffnungen 19 stammende Kühlflüssigkeit zu einem Teil zu den Zähnen des Sägebands 3 hin, um diese vor ihrem Kontakt mit dem zu sägenden Werkstück mit Kühlflüssigkeit, also üblicherweise einer Emulsion, zu benetzen.

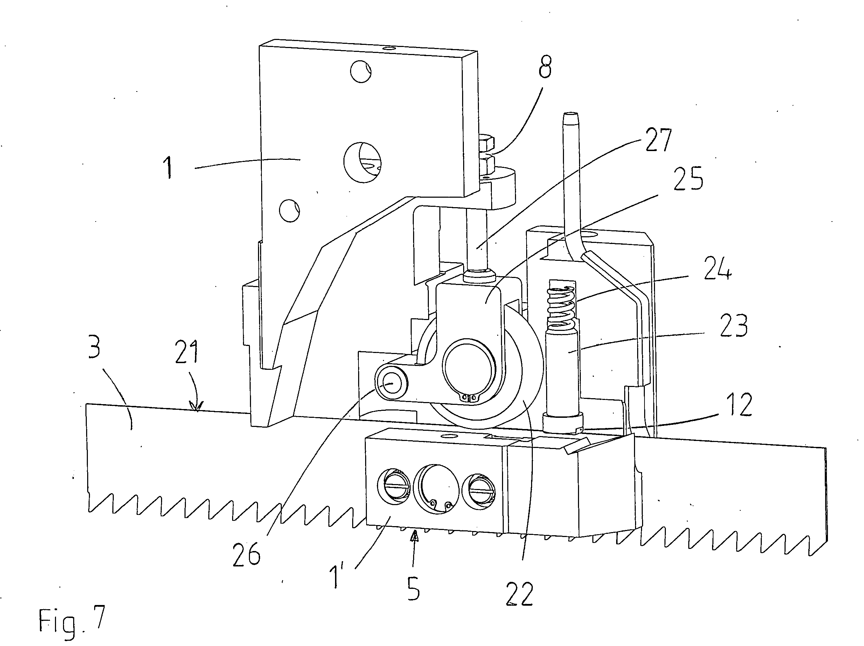

In Figur 7 ist ein weiteres Ausführungsbeispiel für eine erfindungsgemäße Bandführung in einer teilgeschnittenen perspektivischen Ansicht dargestellt. Das Führungsgehäuse 1 ist im Bereich der Bandrückenführung ausgebrochen, um deren konkrete Ausführung im vorliegenden Ausführungsbeispiel zu verdeutlichen. Demgemäß ist die Seitenführung 5 von dem diese haltenden Bereich 1' des Führungsgehäuses 1 verdeckt. Die Führung des Bandrückens 21 des Sägebandes 3 erfolgt mittels einer Bandrücken-Führungsplatte 12 sowie einer Führungsrolle 22, die auf dem Bandrücken 21 abrollt. Um sicherzustellen, dass die Führungsrolle 22 den Hauptteil des Schnittdrucks übernimmt, ist die Bandrücken-Führungsplatte 12 von einem Gleitführungsstift 23 gehalten, welcher seinerseits mittels einer Feder 24 im Führungsgehäuse 1 sitzt und aufgrund der elastischen Rückstellkraft der Feder 24 kaum zur Aufnahme des Schnittdrucks beiträgt. Vielmehr dient die durch die Bandrücken-Führungsplatte 12 gebildete zusätzliche Gleitführung zur Dämpfung von Schwingungen des Sägebandes 3. Da der Schnittdruck im wesentlichen von der Führungsrolle 22 aufgenommen wird, kann sich das Sägeband 3 nicht in die Bandrücken-Führungsplatte 12 einarbeiten und einen den Bandrücken 21 aufpilzenden Kanal in der Bandrücken-Führungsplatte 12 bilden, wie dies im Stand der Technik oft der Fall ist.

Die Führungsrolle 22 ist drehbar in einer Wippe 25 gelagert, die ihrerseits mittels eines Schwenkzapfens 26 am Führungsgehäuse 1 schwenkbar befestigt ist. Eine Abstützung 27 sorgt dafür, dass die Führungsrolle 22 trotz ihrer schwenkbaren Lagerung die erforderlichen Kräfte auf den Bandrücken 21 ausüben kann. Diese Abstützung 27 stützt sich wiederum gegen das Führungsgehäuse 1 ab und ist vorzugsweise mit einer Kraftmesseinrichtung 8 versehen, mittels der der Schnittdruck laufend gemessen und infolgedessen entsprechend geregelt werden kann.

Während die Führungsrolle 22 sehr verschleißresistent hohe Kräfte auf den Bandrücken 21 des Sägebandes 3 aufbringen und damit einen hohen Schnittdruck bewirken kann, sorgt die zusätzliche, federgelagerte Gleitführung mittels der Bandrücken-Führungsplatte 12 für eine effektive Schwingungsdämpfung, so dass auch kein erhöhter Verschleiß durch Schwingungen des Sägebandes 3 entstehen kann. Die kombinierte Bandrückenführung des in Figur 7 gezeigten Ausführungsbeispiels ist daher im Hinblick auf die Lösung der gegebenen Aufgabe besonders vorteilhaft.

## Patentansprüche

1. Sägemaschine mit einem Sägeband (3) oder einem Sägeblatt und mit einer Führung für das Sägeband oder das Sägeblatt, wobei die Führung eine Halterung (14) sowie hochfeste Gleitstücke umfasst, die zur seitlichen Führung des Sägebands (3) oder Sägeblatts an der Halterung (14) angebracht und für einen zumindest zeitweisen gleitenden Kontakt mit einer Seitenfläche des Sägebands (3) oder des Sägeblatts vorgesehen sind, wobei die Gleitstücke wenigstens zum Teil hochfeste Führungsplatten (15) sind, die eine bezüglich der Bewegungsrichtung des Sägeblatts oder Sägebandes (3) stromaufwärtige Kante (16) aufweisen, welche wenigstens zu einem Teil gerade ausgebildet oder mit einer stetigen Krümmung versehen ist, wobei mehrere, unter Bildung von Zwischenräumen (18) voneinander beabstandet angeordnete, hochfeste Führungsplatten (15) an der Halterung (14) angebracht sind und wobei die hochfesten Führungsplatten (15) so angeordnet sind, dass ihre stromaufwärtigen Kanten (16) im wesentlichen parallel verlaufen, **dadurch gekennzeichnet,**
**dass** die Kante (16) oder deren Tangenten in einem Winkel zwischen 20° und 70° zur Bewegungsrichtung (17) des Sägeblatts oder Sägebandes (3) geneigt verlaufen, und dass die Neigung der stromaufwärtigen Kanten (16) der hochfesten Führungsplatten (15) so orientiert ist, dass das Sägeband (3) oder Sägeblatt die Führungsplatten (15) zunächst in einem von den Sägezähnen am weitesten entfernten Bereich ihrer Kanten (16) erreicht.

2. Sägemaschine nach Anspruch 1,
**dadurch gekennzeichnet,**
**dass** die Halterung (14) der Führung mit in oder neben den hochfesten Führungsplatten (15) der Führung mündenden Öffnungen (19) zum Einleiten von Kühlflüssigkeit zwischen die Halterung (14) und das Sägeblatt oder Sägeband (3) versehen ist.

3. Sägemaschine nach Anspruch 2,
**dadurch gekennzeichnet,**
**dass** sich in den Zwischenräumen (18) zwischen den hochfesten Führungsplatten (15) der Führung jeweils mindestens eine Öffnung (19) zum Einleiten von Kühlflüssigkeit befindet.

4. Sägemaschine nach mindestens einem der Ansprüche 1 bis 3,
**dadurch gekennzeichnet,**
**dass** die Sägemaschine mit einem Sägeband (3) versehen ist, wobei die hochfesten Führungsplatten (15) der Führung solcherart flächig ausgebildet sind, dass sie die Höhe des Sägebands (3) in Projektion zu mehr als 50 % überdecken.

5. Sägemaschine nach mindestens einem der Ansprüche 1 bis 4,
**dadurch gekennzeichnet,**
**dass** die Sägemaschine mit einem Sägeband (3) versehen ist, und dass an der Halterung (14) oder an einer zusätzlichen Rücken-Halterung (11) der Führung mindestens eine weitere hochfeste Führungsplatte (12) zur Führung des Bandrückens (21) des Sägebandes (3) angeordnet ist

6. Sägemaschine nach Anspruch 5,
**dadurch gekennzeichnet,**
**dass** die Bandrücken-Führungsplatte (12) mit einer auf dem Bandrücken (21) abrollenden Führungsrolle (22) kombiniert ist.

7. Sägemaschine nach Anspruch 6,
**dadurch gekennzeichnet,**
**dass** zumindest die Führungsrolle (22) auf einer Wippe (25) angebracht ist.

8. Sägemaschine nach Anspruch 7,
**dadurch gekennzeichnet,**
**dass** die Wippe (25) mit einer Kraftmesseinrichtung (8) zur Ermittlung einer auf den Bandrücken (21) wirkenden Kraft versehen ist.

9. Sägemaschine nach mindestens einem der Ansprüche 1 bis 8,
**dadurch gekennzeichnet,**
**dass** die Sägemaschine mit einem Sägeband (3) versehen und die Führung für das Sägeband in ein Führungsgehäuse (1) einsetzbar ist, wobei das Führungsgehäuse (1) mit einer schaltbaren Kühlmittelzufuhr versehen ist.

10. Sägemaschine nach Anspruch 9,
**dadurch gekennzeichnet,**
**dass** das Führungsgehäuse (1) mit einer Kraftmesseinrichtung (8) versehen ist, die eine auf den Bandrücken wirkende Kraft detektiert.

11. Sägemaschine nach mindestens einem der Ansprüche 1 bis 10,
**dadurch gekennzeichnet,**
**dass** die hochfesten Führungsplatten (12, 15) der Führung aus Hartmetall und/oder Keramik gefertigt sind.

## Claims

1. Sawing machine having a band saw blade (3) or a saw blade and having a guide for the band saw blade or the saw blade, wherein the guide comprises a holder (14) as well as high-strength slide blocks which for lateral guidance of the band saw blade (3) or saw blade are mounted on the holder (14) and are intended for at least intermittent sliding contact with a side face of the band saw blade (3) or of the saw blade, the slide blocks being at least in part high-strength guide plates (15) having an edge (16) upstream in respect of the direction of movement of the saw blade or band saw blade (3), which edge is at least partly straight or provided with a continuous curve, wherein a plurality of high-strength guide plates (15), which are arranged spaced apart from one another to form interspaces (18), are mounted on the holder (14) and wherein the high-strength guide plates (15) are arranged so that their upstream edges (16) run substantially parallel,
**characterised in that**
the edge (16) or its tangents run at an angle of inclination of between 20° and 70° with respect to the direction of movement (17) of the saw blade or band saw blade (3), and
the inclination of the upstream edges (16) of the high-strength guide plates (15) is oriented so that the band saw blade (3) or saw blade reaches the guide plates (15) initially in a region of their edges (16) furthest from the saw teeth.

2. Sawing machine according to claim 1,
**characterised in that**
the holder (14) of the guide is provided with openings (19) which open into or next to the high-strength guide plates (15) of the guide for introducing cooling fluid between the holder (14) and the saw blade or band saw blade (3).

3. Sawing machine according to claim 2,
**characterised in that**
at least one opening (19) for introducing cooling fluid is located in each of the interspaces (18) between the high-strength guide plates (15) of the guide.

4. Sawing machine according to at least one of claims 1 to 3,
**characterised in that**
the sawing machine is provided with a band saw blade (3), wherein the high-strength guide plates (15) of the guide are of planar construction such that in projection they overlap more than 50 % of the height of the band saw blade (3).

5. Sawing machine according to at least one of claims 1 to 4,
**characterised in that**
the sawing machine is provided with a band saw blade (3), and on the holder (14) or on an additional back holder (11) of the guide there is arranged at least one further high-strength guide plate (12) for guiding the back (21) of the band saw blade (3).

6. Sawing machine according to claim 5,
**characterised in that**
the guide plate (12) for the back of the band saw blade is combined with a guide roller (22) which rolls on the back (21) of the band saw blade.

7. Sawing machine according to claim 6,
**characterised in that**
at least the guide roller (22) is mounted on a rocker (25).

8. Sawing machine according to claim 7,
**characterised in that**
the rocker (25) is provided with a force-measuring device (8) for determining a force acting on the back (21) of the band saw blade.

9. Sawing machine according to at least one of claims 1 to 8,
**characterised in that**
the sawing machine is provided with a band saw blade (3) and the guide for the band saw blade is insertable into a guide housing (1), the guide housing (1) being provided with a switchable coolant supply.

10. Sawing machine according to claim 9,
**characterised in that**
the guide housing (1) is provided with a force-measuring device (8) which detects a force acting on the back of the band saw blade.

11. Sawing machine according to at least one of claims 1 to 10,
**characterised in that**
the high-strength guide plates (12, 15) of the guide are made from hard metal and/or ceramics.

## Revendications

1. Machine de sciage avec un ruban de scie (3) ou une lame de scie et avec un système de guidage pour le ruban de scie ou la lame de scie, sachant que le système de guidage comprend un support (14) ainsi que des coulisseaux à haute résistance qui sont montés sur le support (14) pour le guidage latéral du ruban de scie (3) ou de la lame de scie et qui sont prévus pour un contact glissant au moins temporaire avec une face latérale du ruban de scie (3) ou de la lame de scie, sachant que les coulisseaux sont au moins pour partie des plaques de guidage (15) à haute résistance, qui présentent une arête amont (16), relativement au sens de déplacement de la lame de scie ou du ruban de scie (3), qui est réalisée au moins pour une partie rectiligne ou est pourvue d'une courbure continue, sachant que plusieurs plaques de guidage (15) à haute résistance, disposées à distance les unes des autres en formant des espaces intermédiaires (18), sont montées sur le support (14), et sachant que les plaques de guidage (15) à haute résistance sont disposées de telle sorte que leurs arêtes amont (16) s'étendent pour l'essentiel en parallèle,
**caractérisée en ce que** les arêtes (16) ou leurs tangentes s'étendent en inclinaison sous un angle compris entre 20° et 70° par rapport au sens de déplacement (17) de la lame de scie ou du ruban de scie (3),
et **en ce que** l'inclinaison des arêtes amont (16) des plaques de guidage (15) à haute résistance est orientée de telle sorte que le ruban de scie (3) ou la lame de scie atteint d'abord les plaques de guidage (15) dans une région de leurs arêtes (16) qui est la plus éloignée des dents de scie.

2. Machine de sciage selon la revendication 1, **caractérisée en ce que** le support (14) du système de guidage est pourvu d'ouvertures (19) débouchant dans les plaques de guidage (15) à haute résistance du système de guidage ou à côté de celles-ci, destinées à introduire du liquide de refroidissement entre le support (14) et la lame de scie ou le ruban de scie (3).

3. Machine de sciage selon la revendication 2, **caractérisée en ce qu'**au moins une ouverture (19) destinée à introduire du liquide de refroidissement se trouve dans chacun des espaces intermédiaires (18) entre les plaques de guidage (15) à haute résistance du système de guidage.

4. Machine de sciage selon au moins une des revendications 1 à 3, **caractérisée en ce que** la machine de sciage est pourvue d'un ruban de scie (3), sachant que les plaques de guidage (15) à haute résistance du système de guidage sont réalisées planes de telle sorte qu'elles couvrent la hauteur du ruban de scie (3), en projection, à plus de 50 %.

5. Machine de sciage selon au moins une des revendications 1 à 4, **caractérisée en ce que** la machine de sciage est pourvue d'un ruban de scie (3), et **en ce qu'**au moins une plaque de guidage supplémentaire (12) à haute résistance est disposée sur le support (14) ou sur un support de dos supplémentaire (11) du système de guidage afin de guider le dos de ruban (21) du ruban de scie (3).

6. Machine de sciage selon la revendication 5, **caractérisée en ce que** la plaque de guidage (12) de dos de ruban est combinée avec un galet de guidage (22) roulant sur le dos de ruban (21).

7. Machine de sciage selon la revendication 6, **caractérisée en ce qu'**au moins le galet de guidage (22) est installé sur une bascule (25).

8. Machine de sciage selon la revendication 7, **caractérisée en ce que** la bascule (25) est pourvue d'un dispositif de mesure de force (8) destiné à déterminer une force agissant sur le dos de ruban (21).

9. Machine de sciage selon au moins une des revendications 1 à 8, **caractérisée en ce que** la machine de sciage est pourvue d'un ruban de scie (3) et le système de guidage pour le ruban de scie peut être installé dans un carter de guidage (1), sachant que le carter de guidage (1) est pourvu d'une alimentation de fluide de refroidissement pouvant être contrôlée.

10. Machine de sciage selon la revendication 9, **caractérisée en ce que** le carter de guidage (1) est pourvu d'un dispositif de mesure de force (8) qui détecte une force agissant sur le dos de ruban.

11. Machine de sciage selon au moins une des revendications 1 à 10, **caractérisée en ce que** les plaques de guidage (12, 15) à haute résistance du système de guidage sont fabriquées en métal dur et/ou en céramique.
